Europäisches Patentamt

(19) European Patent Office

Office européen des brevets

(11) Publication number : **0 449 412 A1**

## (12) EUROPEAN PATENT APPLICATION

(21) Application number : 91301164.9

(22) Date of filing : 13.02.91

(51) Int. Cl.$^5$ : **G21C 17/108**

(30) Priority : 05.03.90 US 488169

(43) Date of publication of application :
02.10.91 Bulletin 91/40

(84) Designated Contracting States :
BE CH ES FR GB LI

(71) Applicant : THE BABCOCK & WILCOX
COMPANY
1010 Common Street, P.O. Box 60035
New Orleans, Louisiana 70160 (US)

(72) Inventor : Brown, Steve Kelly
103 Westfield Drive
Lynchburg Virginia 24551 (US)
Inventor : Dixon, Larry Deon
113 Trading Block Lane
Forest Viriginia 24551 (US)

(74) Representative : Purvis, William Michael
Cameron et al
D. Young & Co. 10 Staple Inn
London WC1V 7RD (GB)

(54) Instrumentation thimble tube for nuclear reactor.

(57) A thimble tube (24) for use in a fuel assembly guide tube (12) in a nuclear reactor is an elongate hollow tube having one end closed. A portion of the tube (24) that extends into the reactor is formed from a plurality of sections (26, 28) attached to each other to form the tube in an alternating fashion along the width and length of the tube. The sections (26, 28) are formed from materials having different coefficients of thermal expansion to cause the thimble tube (24) to warp into supporting contact with the interior of the guide tube (12) at normal reactor operating temperature.

FIG. 2

## THIMBLE TUBE

The invention relates generally to nuclear reactors and in particular to thimble tubes for use in fuel assembly guide tubes thereof.

In commercial nuclear reactors, guide tubes provided in the fuel assembly have thimble tubes therein. These fuel assembly guide tubes and with the thimble tubes therein are spaced throughout the fuel assembly and can receive either control rods or neutron detectors. The neutron detectors are important to efficient reactor operation as they are inserted into the thimble tubes in the reactor and are used to provide flux maps of the core. The guide tubes and thimble tubes that receive the neutron detectors are part of the reactor coolant system pressure boundary and extend from a sealed table outside the reactor vessel to the top of the core. Such instrumentation tubes normally extend through the bottom of the reactor vessel so as not to interfere with the reactor vessel cover and control rod drive mechanism. The thimble tubes are each sealed at the end inside the respective guide tube to prevent loss of primary coolant through the thimble tube. In the reactor coolant system, coolant flows through flow holes in a lower core plate and flow holes in the lower part of the guide tubes into and through the guide tubes and exits at the top of the guide tubes. Due to their entry point into the reactor, these thimble tubes generally receive little or no lateral support along their length and are subject to flow induced vibration by the coolant during normal reactor operations. The vibrations tend to cause the thimble tubes to contact the fuel assembly guide tubes, which has resulted in through-wall wear or thinning of the thimble tubes and cracking of the fuel assembly guide tubes. Thinning of the thimble tube wall can lead to loss of integrity at a system pressure boundary and loss of reactor coolant and pressure. Cracking of the fuel assembly guide tube can lead to disruption of proper coolant flow and/or damage to the thimble tube. The addition of flow limiters has been unsuccessful as this has been reported to aggravate the problem. Plugging or repositioning the guide tubes is also not an ideal solution as this changes the coolant flow or changes the positioning of neutron detectors in the core. Related art of which the applicants are aware includes:-

Patent Specification US-A-4 229 256 which discloses the use of a thimble tube having a corrugated section at its lower end to distribute the control rod deceleration forces over an extended distance in a "scram" situation.

Patent Specification US-A-4 070 241 which discloses the use of a removable radial shielding assembly for closing interassembly gaps in the reactor core assembly load plane. A flexible shielding assembly is provided with a loose fitting elongate insert in an axial opening that is bounded by upper and lower end walls. The insert is constructed of a material having a higher coefficient of thermal expansion than the shielding assembly and causes bowing thereof from pressure against the upper and lower end walls.

Patent Specification US-A-4 318 776 which discloses thimble tubes that extend through the wall of the pressure vessel of a boiling water reactor and are sealed from the interior of the pressure vessel to allow exchanging of detectors in the thimble tubes during reactor operation.

Patent Specifications US-A-3 664 924; US-A-4 077 843; US-A-4 295 935; US-A-4 474 730; and US-A-4 839 136 disclose the use of bimetallic spacer grids for nuclear fuel assemblies.

As it can be seen, the prior art does not address the problem of damage to guide tubes and thimble tubes by flow induced vibration of thimble tubes.

According to one aspect of the invention there is provided a thimble tube, for use in a fuel assembly guide tube in a nuclear reactor, formed as an elongate hollow tube having one end closed and having a portion of the tube that is to extend into the reactor formed from a bimetallic construction such that at normal reactor operating temperature the bimetallic portion of the tube will be caused to warp into supporting contact with the inner surface of the guide tube.

According to another aspect of the invention there is provided a thimble tube, for use in a fuel assembly guide tube in a nuclear reactor, formed as an elongate hollow tube having one end closed; having a portion of the tube that extends into the reactor formed from a plurality of sections attached to each other to form the tube in alternating fashion along the width and length of the tube; and having the sections formed from materials having different thermal coefficients of expansion and alternately positioned such that at normal reactor operating temperature the tube is caused to warp into supporting contact with the interior of the guide tube.

Providing a thimble tube constructed from materials having different coefficients of thermal expansion causes the thimble tube, which is straight at room temperature, to warp into a wavy or spiral shape along its length when exposed to normal reactor operating temperatures. This results in multiple or continuous support positions of the thimble tube within the guide tube. The tendency of the thimble tube to respond to fluid flow is thus reduced and wear of the thimble tube and cracking of the fuel assembly guide tube is inhibited.

The invention is diagrammatically illustrated by way of example in the accompanying drawings, in which:

Figure 1 illustrates a side sectional view of a thimble tube of previously proposed kind in a fuel assembly guide tube;

Figure 2 illustrates a side sectional view of a thimble tube according to the invention in a fuel assembly guide tube at normal operating temperature; and

Figure 3 is a top sectional view of the thimble tube of Figure 3.

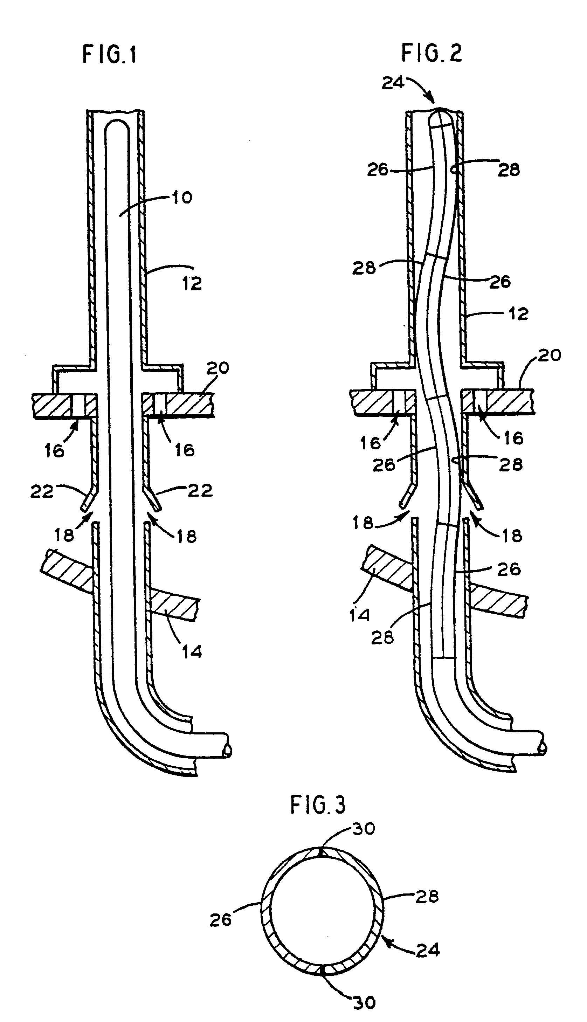

Referring to the drawings, a thimble tube 10 shown in Figure 1 is positioned inside a guide tube 12 a lower portion of which penetrates a reactor vessel wall 14. The guide tube 12 and the reactor vessel wall 14 are sealed together in a manner known in the industry to prevent loss of coolant and pressure from the reactor. The lower end of the guide tube 12 (not shown) is attached to a sealed table that allows insertion of the thimble tube 10 without loss of coolant or pressure and such apparatus is known in the industry. The thimble tube 10 has no openings to allow coolant to flow thereinto and forms and is part of the reactor coolant system pressure boundary. Coolant flowing upwardly through the guide tube 12 enters through flow holes 16, 18 respectively provided in a lower core plate 20 and the lower portion of the guide tube 12. The lower portion of the guide tube 12 is provided with outwardly flared edges 22 to help direct coolant into the guide tube 12. A neutron detector (not shown) is inserted through the lower end of the thimble tube 10 and directed to a position within the thimble tube 10 to take readings of core reactivity during reactor operations. For ease of illustration, only one guide tube 12 and thimble tube 10 is shown but it should be understood that there are multiple guide tubes and thimble tubes provided in a fuel assembly to receive neutron detectors. The flow of coolant through the guide tube 12 in conjunction with the lack of support of the thimble tube 10 results in vibration and wear of the thimble tube 10.

Referring to Figures 2 and 3, a thimble tube 24 is similar to the thimble tube 10 in that it is an elongate hollow tube which has one end closed and is able to receive a neutron detector. The portion of the thimble tube 24 that extends into the reactor, beginning slightly below the reactor vessel wall 14, is formed of a bimetallic construction. As indicated by the vertical and horizontal lines in Figure 2 the bimetallic section of the thimble tube 24 is formed from a series of alternating sections 26, 28 attached to each other to form the thimble tube 24 in an alternating fashion along the width and length of the thimble tube 24. The sections 26, 28 are materials that have different coefficients of thermal expansion. As can be seen in Figure 3, each of the sections 26, 28 is semicircular in cross section and attached to its corresponding section having a different coefficient of thermal expansion at joints 30. At temperatures encountered during assembly or when the reactor is below normal operating temperature, the portion of the thimble tube 24 in the guide tube 12 will be straight as in Figure 1. This allows easy insertion and removal of the thimble tube 24. At reactor operating temperatures however the different coefficients of thermal expansion of the sections 26, 28 cause the thimble tube 24 to warp into a wavy or spiral shape along its length inside the guide tube 12. This provides continuous or multiple positions of support to minimize coolant flow induced vibration, wear, and cracking of the thimble tube 24 and the guide tube 12.

The sections 26, 28 are formed from metals that are suitable for use inside a nuclear reactor and that have sufficiently different coefficients of thermal expansion and in the preferred embodiment are formed from inconel and stainless steel. The structure of the thimble tube 24 is not limited to semicircular sections as illustrated. The different metals could for example be joined together in a spiral fashion. Also, a thimble tube formed from a single material may have a material having a different coefficient of thermal expansion deposited on a portion of the tube surface to achieve a similar bending effect at operating temperatures.

## Claims

1. A thimble tube (24), for use in a fuel assembly guide tube (12) in a nuclear reactor, formed as an elongate hollow tube having one end closed and having a portion of the tube (24) that is to extend into the reactor formed from a bimetallic construction such that at normal reactor operating temperature the bimetallic portion of the tube will be caused to warp into supporting contact with the inner surface of the guide tube (12).

2. A thimble tube according to claim 1, wherein the bimetallic construction comprises alternating longitudinal sections ( 26, 28) of metals having different coefficients of thermal expansion.

3. A thimble tube according to claim 2, wherein the alternating longitudinal sections (26, 28) are semicircular in cross section and are attached to a corresponding semicircular section (26, 28) having a different coefficient of thermal expansion.

4. A thimble tube according to any one of claims 1 to 3, wherein the bimetallic construction comprises inconel and stainless steel.

5. A thimble tube (24), for use in a fuel assembly guide tube (12) in a nuclear reactor, formed as an elongate hollow tube having one end closed; having a portion of the tube that extends into the reactor formed from a plurality of sections (26, 28) attached to each other to form the tube (24) in alternating fashion along the width and length of the tube (24); and having the sections (26, 28) formed from materials having different thermal coefficients of expansion and alternately positioned such that at normal reactor operating temperature the tube (24) is caused to warp into supporting contact with the interior of the guide tube (12).

6. A thimble tube according to claim 5, wherein the sections (26, 28) are semicircular in cross section.

7. A thimble tube according to claim 5 or claim 6, wherein the alternating sections (26, 28) are respectively formed from inconel and stainless steel.

FIG.1

FIG.2

FIG.3

European Patent
Office

**EUROPEAN SEARCH REPORT**

Application Number

EP 91 30 1164

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 236 149 (FRAMATOME)<br>* Column 4, line 57 - column 5, line 22; figure 2 *<br>--- | 1,5 | G 21 C 17/108 |
| A | DE-A-1 926 811 (TELEFLEX)<br>* Page 8; figures 1,2 *<br>--- | 1 | |
| A | EP-A-0 225 032 (U.K.A.E.A.)<br>* Column 3, lines 37-52; abstract; figure 2 *<br>----- | 1,5 | |
| | | | **TECHNICAL FIELDS SEARCHED (Int. Cl.5)**<br><br>G 21 C |

The present search report has been drawn up for all claims

| Place of search | Date of completion of the search | Examiner |
|---|---|---|
| THE HAGUE | 29-04-1991 | JANDL F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)